# EUROPEAN PATENT APPLICATION

(11) **EP 3 382 665 A1**
(43) Date of publication of application: **03.10.2018**
(21) Application number: 18160583.3
(22) Date of filing: 07.03.2018
(51) Int. Cl.: G08B 25/14

(54) **METHOD FOR RECREATING TIME-BASED EVENTS USING A BUILDING MONITORING SYSTEM**

(30) Priority: 29.03.2017 US 201715472650
(71) Applicant: Honeywell International Inc., Morris Plains, NJ 07950 (US)
(72) Inventor: MEGANATHAN, Deepak Sundar, Morris Plains, NJ 07950 (US); HEGDE, Vinay, Morris Plains, NJ 07950 (US)
(74) Representative: Houghton, Mark Phillip

(57) **Abstract**

An electronic processor-implemented method (10) is provided for virtually recreating time-based events associated with a building (12) using a building monitoring system (13) having a plurality of monitored electronic devices (16). The method (10) includes storing time-stamped event data (18) for events associated with each monitored electronic device (16) in an electronic memory (20), and storing a visual representation (22) of the building (12) in the electronic memory (20). In response to signals (28) from a user input device (30) indicating a selected portion (24) of the building (12) and a selected timestamp, the method (10) accesses the visual representation (22) and the time-stamped event data (18) and provides a time-based, virtual re-creation of the events associated with each device (16) in the selected portion (24) over the selected timestamp.

## Description

### CROSS-REFERENCE TO RELATED APPLICATIONS

Not Applicable.

### FEDERALLY SPONSORED RESEARCH OR DEVELOPMENT

Not Applicable.

### MICROFICHE/COPYRIGHT REFERENCE

Not Applicable.

### FIELD

This disclosure relates to building/home monitoring/security systems having a plurality of electronic devices located throughout a building/home that are monitored and/or controlled by the system.

### BACKGROUND

Building/home security/monitoring systems capture many of the events/ activities that occur in a building/home on a day-to-day basis and that data often is stored in an electronic memory, either locally in the security/monitoring system or in the "cloud". For example, such systems commonly capture events/activities indicating what lights are on or off in the building/home, the temperature in the building/home, the status of multiple connected electronic devices (on/off, working/disabled, active/inactive, etc.), sensor triggered alarms, and entry and exits to and from the building/home. Additionally, it is now common for many individuals to carry a mobile electronic device, typically a cell phone or smart phone, that allows the location of the individual to be tracked, and furthermore allows the individual to make digital recordings, such as digital photos, digital videos, and digital voice recordings. Furthermore, it is now becoming increasingly common for individuals to interact on a regular basis during any given day with electronic social media by uploading photos/videos, tagging friends/family members, interacting with friends/family members, "liking" or "sharing" other's social media posts, and other interactions with social media, all of which are often stored in electronic memory as a "history" of the interactions. These interactions will typically occur when the individual utilizes a mobile device, such as a mobile cell phone or smart phone, but can also occur on tablet computers, laptop computers and desktop computers.

While all this data is often recorded or maintained as a log or history in one electronic form or the other, a user, investigator or other authorized person currently lacks the ability to review/visualize this data in a consolidated manner, especially in any sort of intuitive way. Accordingly, there is room for improvements in currently available systems. The ability to review/visualize this data such as in a virtual re-creation of a virtual environment in which such data is captured addresses the problem of mapping and enabling improved navigation of an environment. For example, virtually recreating time-based events associated with a building may enable forensic diagnosis of problems such as congestion, emergency incidents or crime scenes. The display of the data in a systematized and preferably interactive manner further facilitates such diagnosis.

### SUMMARY

In accordance with one feature of the invention, an electronic processor-implemented method is provided for virtually recreating time-based events associated with a building using a building monitoring system having a plurality of monitored electronic devices and providing time-stamped event data for each device to an electronic memory. The method includes the steps of storing time-stamped event data for events associated with each monitored electronic device in an electronic memory, and storing a visual representation of the building in the electronic memory, the visual representation including a visual representation of each portion of the building having monitored electronic devices. In response to signals from a user input device indicating a selected portion of the building and a selected timestamp, the method further includes the steps of accessing the visual representation of the building and the time-stamped event data and providing signals to an electronic visual display that provides a time-based, virtual recreation (as in re-creation and not activity done for enjoyment when one is not working, throughout this document) of the events associated with each monitored electronic device in the selected portion of the building over the selected timestamp by displaying the events in the visual representation of the selected portion of the building. This enables forensic diagnosis of problems such as congestion, emergency incidents or crime scenes. The display of the data in a systematized and preferably interactive manner is further enabled which further facilitates such diagnosis.

As one feature, the method further includes the steps of storing time-stamped data of electronic recordable activities for at least one selected individual who utilizes the building and accessing the time-stamped data of electronic recordable activities and providing signals to the electronic visual display that provides a visual indication of at least some of the time-stamped data of electronic recordable activities for a selected individual during the selected timestamp. The electronic recordable activities includes at least one of the following: location information of an electronic device carried on the person of a selected individual, interaction with electronic communication systems by a selected individual, interaction with electronic social media by a selected individual, digital photos taken by a selected individual, digital videos taken by a selected individual, and digital audio recordings made by a selected individual.

In one feature, the visual indication of the time-stamped data of electronic activities includes user readable text. This text is preferably time information indicating to a user/viewer the timestamp at which the information, such as an object, was captured. This enables a viewer to diagnose potential contradictions in the data, such as two objects being in the same volume of space and as such facilitates the forensic diagnosis of problems.

According to one feature, the method further includes the step of pausing the passage of time in the virtual recreation in response to signals from a user input device indicates that the passage of time should be paused in the virtual recreation.

As one feature, the method further includes the step of displaying a time bar in the virtual recreation that illustrates at least a portion of the selected timestamp and includes a user selectable icon that allows a user to adjust the point in time to be currently displayed in the virtual recreation.

In one feature, the method further includes accessing the time-stamped data and the visual representation and providing signals to the electronic visual display to simulate movement in the virtual recreation from the selected portion of the building to another selected portion of the building in response to signals from a user input device indicating a user request to display movement from the selected portion of the building to the another selected portion of the building.

According to one feature, the step of storing a visual representation of the building includes storing in the electronic memory a visual representation of furniture and other objects located in each portion of the building having monitored electronic devices. Such representation are preferably associated with a timestamp. This can assist in criminal diagnostics such as theft of an object. Further sequential timestamps for such representations can be used to establish a path of travel of such objects when virtually recreating time-based events.

As one feature, the step of storing a visual representation of the building includes storing in the electronic memory a user readable text tag for each type of monitored electronic device identifying the type of monitored electronic device.

In one feature, displaying the events in the visual representation of the building includes displaying a readable text tag for each monitored electronic device in the selected portion of the building, each readable text tag describing an event associated with each monitored device at the point in time being displayed.

As one feature, the visual representation of the building is a three-dimensional visual representation of each portion of the building having monitored electronic devices. The benefits for furniture and other objects mentioned above apply here also.

In one feature, the visual representation of the building further includes three-dimensional visual representations of furniture and other objects located in each portion of the building having monitored electronic devices.

According to one feature, the visual representation of the building further includes a three-dimensional visual representation of at least one monitored electronic device at a location of the at least one monitored electronic device in the building.

As one feature, the visual representation of the building is a two-dimensional visual representation of each portion of the building having monitored electronic devices.

In one feature, the visual representation of the building further includes two-dimensional visual representations of furniture and other objects located in each portion of the building having monitored electronic devices.

According to one feature, the visual representation of the building further includes a two-dimensional visual representation of at least one monitored electronic device at a location of the at least one monitored electronic device in the building.

As one feature, the virtual recreation includes a user selectable icon representing one of the monitored electronic devices, and further includes displaying in the virtual recreation data associated with the one of the monitored electronic devices in response to a user selecting the user selected icon.

In one feature, at least one of the monitored electronic devices is a video camera and the virtual recreation includes a user selectable icon representing the video camera, and the method further includes playing a video in the virtual recreation in response to a user selecting the user selected icon, the video being a video taken by the video camera during the selected timestamp.

According to one feature, a non-transitory computer readable storage medium includes instructions for implementing a method including any of the above features in an electronic processor executing the instructions.

As one feature, a system is provided for creating a virtual recreation of time-based events associated with a building. The system includes a plurality of monitored electronic devices, an electronic memory, a visual display, and an electronic processor configured to implement a method including any of the above features.

Other features and advantages will become apparent from a review of the entire specification, including the appended claims and drawings.

### BRIEF DESCRIPTION OF THE DRAWINGS

Fig. 1 is a block diagram illustrating a method and system for virtually recreating time-based events associated with the building having a plurality of monitored electronic devices;
Fig. 2 is a view illustrating a visual representation of a building for use in the system and method of Fig. 1;
Fig. 3 is another block diagram showing the method and system of Fig. 1 in different detail;
Fig. 4 is a somewhat diagrammatic view illustrating a virtual recreation according to the system and method of Figs. 1 and 3;
Fig. 5 is view illustrating another virtual recreation according to the system and method of Figs. 1 and 3; and
Fig. 6 is a flow chart illustrating an embodiment of the method for virtually recreating time-based events associated with a building implemented by the system of Figs. 1-5.

### DETAILED DESCRIPTION

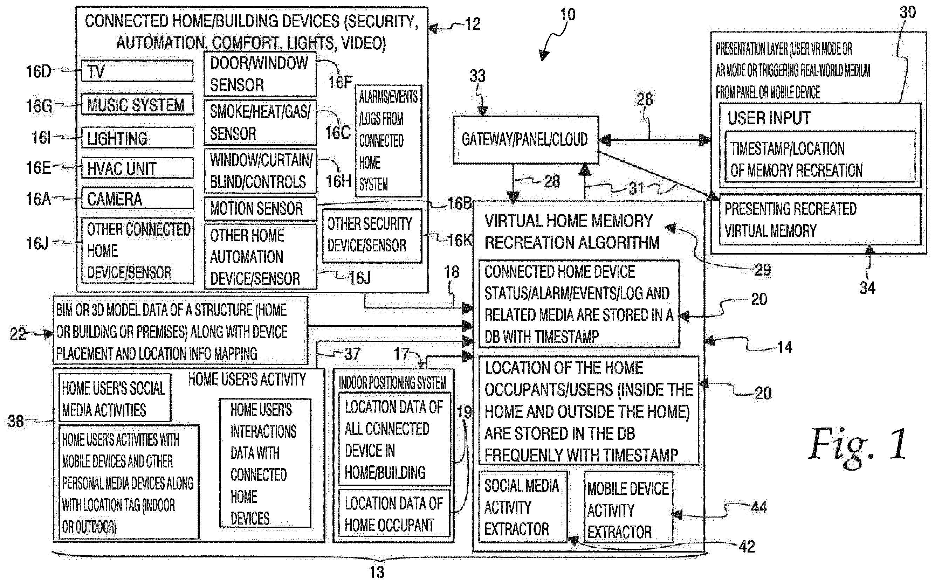

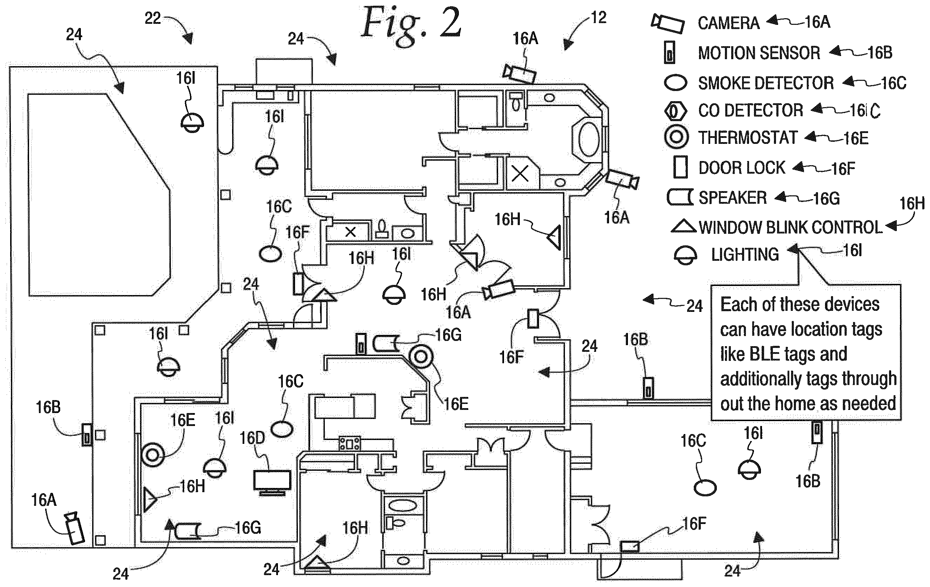

With reference to Figs. 1 and 2, a method and system 10 is illustrated for virtually recreating time-based events associated with a building 12, such as a home 12, by utilizing a building monitoring system 13 having an electronic processor 14 and a plurality of monitored electronic devices 16 operatively connected to the processor 14 via hardwires or wireless signals. The method and system 10 allows a user to analyze past incidents in the building/home 12 by revisiting the incidents in the virtual recreation. As used herein, the term "monitoring system" 13 can be any system wherein electronic devices 16 are connected to a central system that monitors and/or controls the electronic devices 16, such as, for example, a building control system or security system, many of which are known, and the term "monitored electronic devices" 16 can be any monitored, connected and/or controlled electronic device that are utilized in such systems, many types of which are known, including, without limitation, cameras 16A, motion sensors 16B, smoke/heat/gas sensors/detectors 16C, TV's 16D, heating, venting and air conditioning systems and/or components for such systems such as thermostats 16E, door/window locks or sensors 16F, music systems or speakers 16G, window blind/curtain controls 16H, lighting 16I, other electronic devices 16J such as electrical outlets, stereos, TV's, other household appliances, and other types of security or safety sensors 16K not previously mentioned. The system 10 can also include an indoor position system 17 that includes monitored/connected electronic devices in the form of location detectors 16J that can detect and determine the location data of monitored/connected electronic devices 16 having a location device, such as a Bluetooth low energy (BLE) tag, many types of which are known, and further can locate occupants/users within the home 12 who are carrying a location device, again such as a BLE tag and provide location data for such occupants/users.

The system 10 of this disclosure is configured to store time-stamped event data 18 for events associated with each of the monitored electronic devices 16 in an electronic memory 20. The events associated with each of the monitored electronic devices 16 can be any event or status associated with each of the monitored electronic devices 16, such as, for example, a photo or video taken by a camera 16A, the detection of motion by a motion sensor 16B, the detection of smoke by a smoke detector 16C, the channel currently displayed on a TV 16D, the temperature setting of a thermostat 16E, the locking or unlocking of a door lock 16F, the music played by a music system 16G, the operating position of a blind or curtain controlled by a window blind/curtain control 16H, the lighting level of a light 16I, or the operational status (on/off, low power, operating error, etc.) of any of the electronic devices 16. The time-stamped event data 18 can also be a time-stamped location data 19 of an occupant/user within the home 12 who is carrying a location device, such as a BLE tag. It should be understood that as used herein the term "timestamp" includes both clock time (hours, minutes, seconds, etc.) and calendar date (day, month, year).

Additionally, the system 10 stores a visual representation 22 of the home 12 in the electronic memory 20, with the visual representation 22 including a visual representation of each portion 24 of the building 12 having monitored electronic devices 16, such as each room 24 of the home 12 shown in Fig. 2. The visual representation 22 can be in the form of a 2-D or a 3-D model, such as a "building information model (BIM)" that includes 3-D representations of furniture and other objects within the home 12 and information regarding the location 19 of each of the monitored electronic devices 16 in the home 12 together with visual representation 25 of the devices 16. It should be understood that the location 19 of each of the monitored electronic devices 16 in the home can be entered by a user based upon the user's knowledge of the locations, or, at least some of the location information can be generated by the indoor position system 17 in the form of location data 19 if the system 10 employs the indoor position system 17. Furthermore, it should be understood that the location 19 information for at least some of the devices 16 may be stored in a separate database that can be related to the location data for the visual representation 22. The system 10 is configured to access the electronic memory 20 to retrieve the visual representation 22 of any selected portion 24 of the home 12 including the location of any electronic devices 16 in the selected portion 24 of the home 12. In this regard, it should be understood that a selected portion 24 of the home 12 can be a room 24, multiple rooms 24, an exterior portion 24 of the home 12 or even the entire home 12.

In response to signals 28 from a user input device 30 indicating a user selected portion 24 of the home 12 and a user selected timestamp, the electronic processor 14 runs a virtual home memory recreation algorithm 29 that accesses the visual representation 22 of the home 12 and the time-stamped event data 18 in the electronic memory 20 and provides signals 31 to an electronic display 34 that provides a time-based, virtual recreation of the events associated with each monitored electronic device 16 in the selected portion of the home 12 over the selected timestamp by displaying the events in the visual representation of the selected portion of the home 12 in response to the signals 31. In this regard, the events for each electronic device can be shown in the form of text blocks 32 positioned adjacent each of the devices 16, or any suitable way for illustrating the event for the particular device. The virtual recreation can also include text and numerals indicating the current time and date within the virtual recreation. The signals 28 and 31 can be transmitted via a direct wire connection, through a panel, a gateway, a wireless network, or the cloud, as shown at 33. The user input device 30 can be any suitable type, many of which are known, and the user inputs can be in any suitable form, again many of which are known, including keypad entries, selectable icons, and voice commands into a microphone using any suitable voice recognition technology.

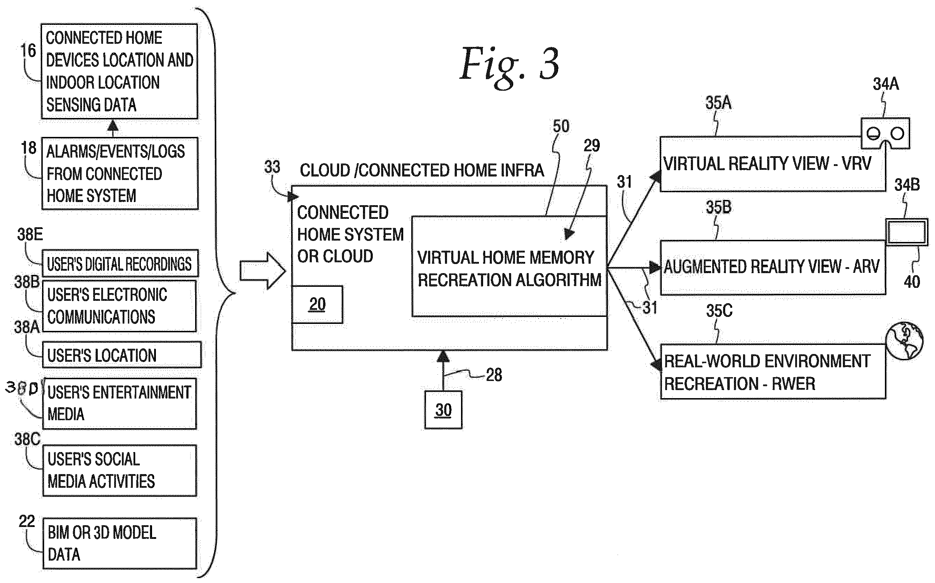

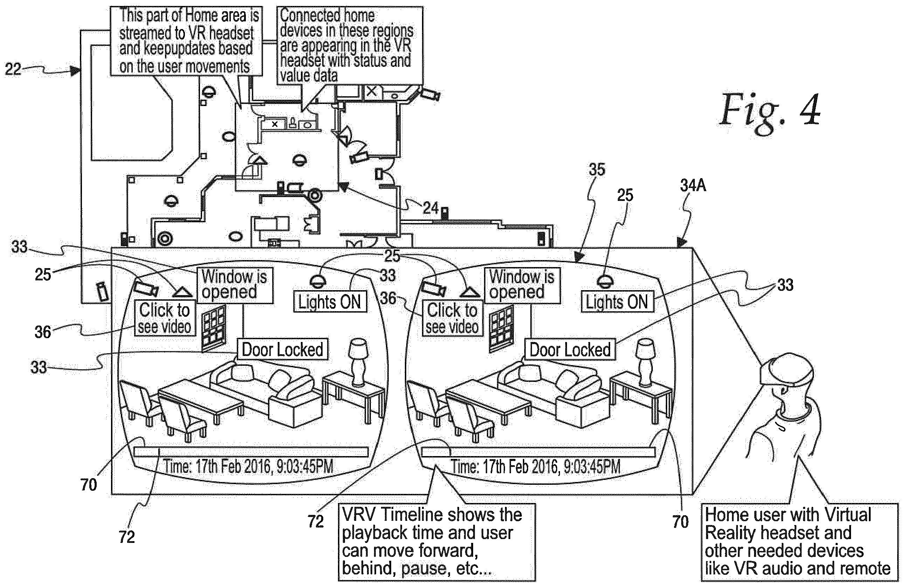

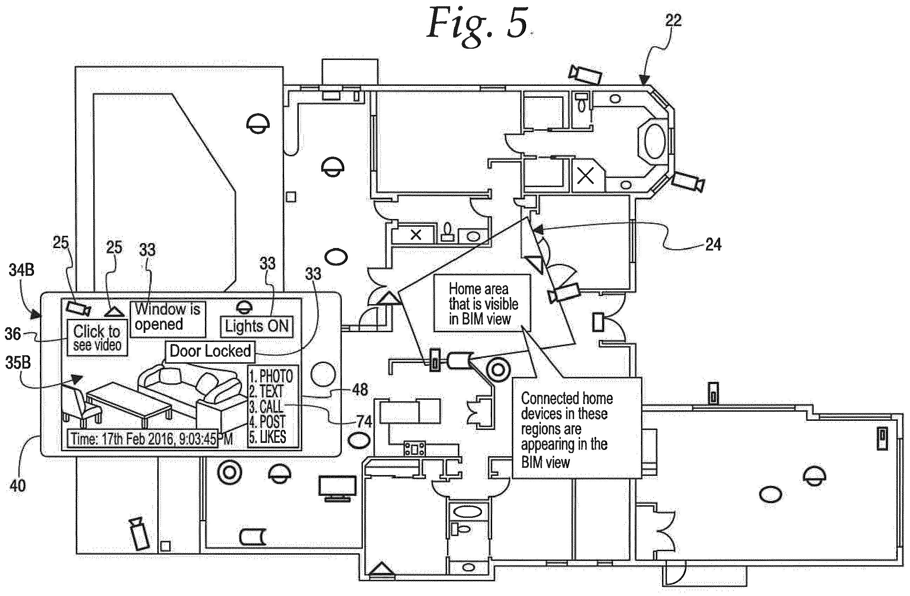

With reference to Figs. 3-5, the electronic display 34 can include any suitable electronic visual display, such as for example, virtual reality goggles 34A or a flat panel screen 34B, such as in a mobile smart phone, a desktop monitor, or a laptop monitor. The virtual recreation can be in the form of a three-dimensional virtual reality view (VRV) 35A displayed in virtual reality goggles 34A such as shown in Fig. 4, a three-dimensional augmented reality view (AR) 35B displayed in a flat panel screen 34B such as shown in Fig. 5, or a two-dimensional visual representation 35C of the building shown in a flat panel screen 34B, such as shown in Fig. 2. Additionally, the system 10 has the capability of replaying sound in the virtual recreation via speakers carried in the display 34 or headphones worn by a user. For example, the sound may be the music that may have been playing on a stereo 16G in the selected portion of the home during the selected timestamp. Additionally, by providing an action icon 36 for certain types of the electronic devices 16, such as, for example, a camera 16A, the user can select the camera 16A as either a user selectable icon or via voice command and the system 10 will send signals 31 to enable the display 34 to initiate a replay of any of the images captured by the camera during a selected timestamp.

The illustrated embodiment system 10 is also configured so that a user can request a real-world environment recreation (RWER) 35C where, in response to signals 28 from the user input device 30 indicating a selected portion of the home 12 and a selected timestamp, the system 10 accesses the visual representation 22 of the home 12 and the time-stamped event data 18 in the electronic memory 20 and provides signals 36 to the electronic devices 16 in the selected portion of the home 12 that causes the electronic devices 16 to recreate the events that occurred for each of the electronic devices 16 in the selected portion of the home 12 during the selected timestamp. This allows a user to recreate, in the real world, the environment that existed in the home 12 within any portion 24 of the home 12 selected by a user for any selected timestamp selected by the user so that the user can experience the environment while the user is located in the selected portion 24 of the home 12.

Additionally, the embodiment of the method and system 10 shown herein has the capability of storing time-stamped data 37 of electronic recordable activities 38 for one or more selected individuals who utilize the home 12, accessing such time-stamped data 37 from other electronic databases that are maintained in an electronic device 40 carried or operated by a selected individual, typically a mobile smartphone or tablet used by an occupant of a home or building, or in electronic databases maintained by other entities, such as, for example, social media entities, which databases may be accessible via the "cloud". In this regard, as shown in Fig. 1, the system 10 can include a social media activity extractor 42 for contacting selected social media sites of selected individuals to extract the data 37, and a mobile device extractor 44 for extracting the data 37 from selected mobile electronic devices of selected individuals.

The electronic recordable activities 38 can include: location information 38A of an electronic device 40 carried on the person of a selected individual; interactions 38B with electronic communication systems, such as for example text messaging, phone calls, and video messaging, by a selected individual; interactions 38C with electronic social media, such as for example social media postings, social media sharing, "tweets", "likes" of other social media posts, etc., by a selected individual; music or videos 38D that is accessed or listened to on a mobile device of a selected user; and digital recordings 38E, such as photo, video, or audio recordings created by a selected individual. As noted above, the time-stamped data 37 of such electronic recordable activities 38 can be stored in an electronic memory 20 of the system 10, or can be stored in an electronic memory of an electronic device 40 carried or operated by a selected individual and accessed using the extractor 44, or can be stored in an accessibly electronic database maintained by another entity, such as by a social media entity and accessed via the extractor 42.

In response to the signals 28 from the user input device 30, the system 10 accesses the time-stamped data 37 of the activity 38 in the electronic memory 20 and provides signals 31 to the electronic display 34 that provides a visual indication 48 of at least some of the time-stamped data 37 of electronic recordable activities 38 for a selected individual during the selected timestamp. In this regard, the visual indication 48 can be any suitable form, such as, for example, a user selectable text listing 48 of the electronic recordable activities 38 as illustrated in Fig. 5. In response to a user selecting the particular activity 38 in the visual indication 48, such as via a selectable text icon or via voice command, the system 10 can provide signals 31 to the display 34 that will recreate the activity 38 in the virtual recreation, such as for example, replaying a video and audio recorded by an electronic device carried or operated by a selected individual.

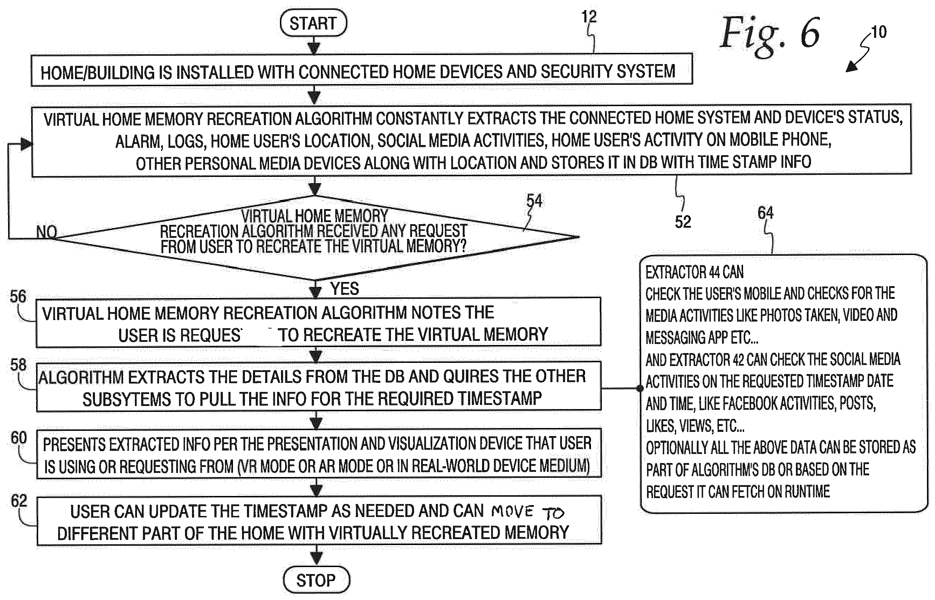

With reference to Fig. 6, an embodiment of the method 10 is illustrated in a flow chart, with the method 10 using the virtual home memory recreation algorithm 29 to constantly extract and store the time-stamped data 18 and 37, as shown at 52, and checks to see if any signals 28 from the user input device 30 have been received, as shown at 54. If the signals 28 have been received, the algorithm 29 notes the user selected timestamp and portion 24 of the home 12, as shown at 56, extracts the data for the selected portion 24 from the visual representation 22 and the relevant time-stamped event data 18,37 from the relevant databases, as shown at 58, and provides the signals 31 to the electronic display 34 to cause the electronic display 34 to provide the virtual recreation, as shown at 60. Furthermore, as shown at 62, the system 10 is capable of updating the requested timestamp and the location 24 in the home 12. Additionally, as shown at 64, the system 10 can extract the time-stamped data 37 from either the local memory 20, or from other electronic databases, including, for example, a user's electronic device that created the electronic recordable activities 38, such as a user's mobile phone 40, and can furthermore check a user's social media activity that may be stored in the cloud or maintained in electronic databases by specific social media sites. It should also be understood that the system 10 can either be configured to run the virtual home memory recreation algorithms in a local electronic processor 14, or in a remote electronic processor 14 via the cloud.

As an example of the system 10 in operation, a user would log into the system 10 and input a selected portion 24 of the home 12 and a selected timestamp using any suitable user input device or means, such as keypad, user selectable icons on the display 30, or via voice commands. The user may also input a request for the electronic recordable activities 38 of a selected individual, or the system 10 can be configured to automatically assume the user is the selected individual as identified by the user's log-on information. As an example, the user could select February 17, 2016 at 9:00 p.m. and the living room of the home 12 and the method and system 10 can automatically select the user as a selected individual for the time-stamped data 37. The system 10 then accesses the electronic memory 20 and any other appropriate electronic databases to retrieve the time-stamped data 18,37 appropriate for the living room of the home 12 at 9:00 p.m. The user then can enter a start command, select a start icon, or give a voice command which would then start the virtual recreation from 9:00 p.m. on February 17, 2016 moving forward in time. The system 10 can provide a time bar, such as the time bar 70 seen in Fig. 4, with a user selectable icon 72 that would allow the user to move the virtual recreation forward and backward in time from the 9:00 p.m. initiation time or to pause the virtual recreation. Furthermore, via further user inputs, the user can navigate the virtual recreation so as to move from one portion 24 of the home 12 virtually to another portion 12 of the home 12, with each portion 12 showing the events that are occurring for each electronic device 16 in that portion 24 of the home 12 during the current time being recreated in the virtual recreation. Additionally, to the extent that the activities 38 of a selected individual have been requested, those activities 38 can be shown by a text listing, such as the text listing 48 in Fig. 5, which provides user selectable text identifiers 74 for each of the activities 38 of the selected individual during the selected time, such as for example, any of the user's social media, mobile phone activities, and/or photos or videos that were reviewed or taken during the selected time period. For example, the user can select a text indication 74 that the selected individual was listening to music on their mobile electronic device during the selected timestamp and by selecting that the text indicator 74, the system 10 will access the appropriate data 37 and send signals 31 to cause virtual recreation to play the music into speakers carried on the display or headphones worn by the user. To the extent that the location of a selected individual has been requested, the system 10 can also access the time-stamped data 37 for the location of that selected individual and provide an indication of the selected individual's location in the virtual recreation at the current time the virtual recreation.

It should be appreciated that the method and system 10 disclosed herein allows a user to recreate events in a home 12 when something critical may have occurred in the home 12. For example, the system 10 allows a user to recreate what was happening in the user's home 12 during the time that a burglary may have occurred or during the time when someone may have had an accident within the home 12. As another example, the system 10 allows a user to determine what happened within a building 12 when a sensor detects a certain event, such as a high carbon dioxide level or unexpected motion within a building 12. As a further example, the system 10 allows a user to recreate an environment in the home 12 similar to an environment in the home 12 during a prior event, such as for example, an environment similar to that which existed during a party.

It should be appreciated that while specific embodiments of the method and system 10 are disclosed herein, this disclosure contemplates that not all embodiments will incorporate all of the features of the disclosed embodiments, and further that, some embodiments may include additional features that are not disclosed or alternate structures or devices that aren't expressly described herein.

## Claims

1. An electronic processor-implemented method for virtually recreating time-based events associated with a building using a building monitoring system having a plurality of monitored electronic devices and providing time-stamped event data for each device to an electronic memory; the method comprising the steps of:
storing time-stamped event data for events associated with each monitored electronic device in an electronic memory;
storing a visual representation of the building in the electronic memory, the visual representation including a visual representation of each portion of the building having monitored electronic devices; and
in response to signals from a user input device indicating a selected portion of the building and a selected timestamp, accessing the visual representation of the building and the time-stamped event data and providing signals to an electronic visual display that provides a time-based, virtual re-creation of the events associated with each monitored electronic device in the selected portion of the building over the selected timestamp by displaying the events in the visual representation of the selected portion of the building.

2. The method of claim 1 further comprising the steps of:
storing time-stamped data of electronic recordable activities for at least one selected individual who utilizes the building, the electronic recordable activities including at least one of the following: location information of an electronic device carried on the person of a selected individual, interaction with electronic communication systems by a selected individual, interaction with electronic social media by a selected individual, digital photos taken by a selected individual, digital videos taken by a selected individual, and digital audio recordings made by a selected individual; and
accessing the time-stamped data of electronic recordable activities and providing signals to the electronic visual display that provides a visual indication of at least some of the time-stamped data of electronic recordable activities for a selected individual during the selected timestamp.

3. The method of claim 1 or claim 2 further comprising the step of pausing the passage of time in the virtual re-creation in response to signals from a user input device indicating that the passage of time should be paused in the virtual re-creation.

4. The method of any of claims 1 to 3 further comprising the step of displaying a time bar in the virtual re-creation that illustrates at least a portion of the selected timestamp and includes a user selectable icon that allows a user to adjust the point in time to be currently displayed in the virtual re-creation.

5. The method of any of claims 1 to 4 that further comprises accessing the time-stamped data and the visual representation and providing signals to the electronic visual display to simulate movement in the virtual re-creation from the selected portion of the building to another selected portion of the building in response to signals from a user input device indicating a user request to display movement from the selected portion of the building to the another selected portion of the building.

6. The method of any of claims 1 to 5 wherein the step of storing a visual representation of the building comprises storing in the electronic memory a user readable text tag for each type of monitored electronic device identifying the type of monitored electronic device.

7. The method of any of claims 1 to 6 wherein displaying the events in the visual representation of the building comprises displaying a/the readable text tag for each monitored electronic device in the selected portion of the building, each readable text tag describing an event associated with the corresponding monitored electronic device at the point in time being displayed.

8. The method of any of claims 1 to 7 wherein the visual representation of the building is a two-dimensional or three-dimensional visual representation of each portion of the building having monitored electronic devices.

9. The method of claim 8 wherein the visual representation of the building further includes two-dimensional or three-dimensional visual representations of furniture and other objects located in each portion of the building having monitored electronic devices.

10. The method of any of claims 1 to 9 wherein the visual representation of the building further includes a two-dimensional or three-dimensional visual representation of at least one monitored electronic device at a location of the at least one monitored electronic device in the building.

11. The method of any preceding claim wherein the virtual re-creation includes a user selectable icon representing one of the monitored electronic devices, and further comprising displaying in the virtual re-creation data associated with the one of the monitored electronic devices in response to a user selecting the user selected icon.

12. The method of any preceding claim wherein at least one of the monitored electronic devices is a video camera and the virtual re-creation includes a user selectable icon representing the video camera, and further comprising playing a video in the virtual re-creation in response to a user selecting the user selected icon, the video being a video taken by the video camera during the selected timestamp.

13. The method of any preceding claim further comprising the step of sending signals to each monitored electronic device in the selected portion of the building to cause each monitored electronic device to recreate the events associated with the monitored electronic device during the selected timestamp.

14. A non-transitory computer readable storage medium comprising instructions for implementing the method of any of claims 1 to 13 in an electronic processor executing the instructions.

15. A system for providing a virtual re-creation of time-based events associated with a building, the system comprising a plurality of monitored electronic devices, an electronic memory, a visual display, and an electronic processor configured to implement the method of any of claims 1 to 13.
